# EUROPÄISCHE PATENTANMELDUNG

(11) **EP 0 750 027 A1**
(43) Veröffentlichungstag der Anmeldung: **27.12.1996**
(21) Anmeldenummer: 96108859.8
(22) Anmeldetag: 03.06.1996
(51) Int. Cl.: C09K 7/02, C09K 7/08, C09K 7/00, E21D 9/06, E21B 43/26

(54) **Verwendung von Cellulosemischethern als Additive für Erddruckschilde**

(30) Priorität: 14.06.1995 DE 19521693
(71) Anmelder: WOLFF WALSRODE AG, D-29655 Walsrode (DE)
(72) Erfinder: Szablikowski, Klaus, Dr., 29664 Walsrode (DE); Lange, Werner, Dr., 27374 Visselhövede (DE); Pannek, Jörn-Bernd, Dr., 29683 Fallingbostel (DE); Kiesewetter, René, Dr., 29683 Fallingbostel (DE)
(74) Vertreter: Braun, Rolf, Dr.

(57) **Zusammenfassung**

Die vorliegende Erfindung betrifft wasserlösliche, insbesondere ternäre, vorzugsweise ionische Cellulosemischether, besonders anionische wasserlösliche Cellulosemischether als Additive für Bohrspülanwendungen.

## Beschreibung

Die vorliegende Erfindung beansprucht die Verwendung neuartiger ternärer ionischer Cellulosemischether, deren Einsatz beim Schildvortrieb für mit Erddruck betriebene Schildsysteme im Vergleich zu herkömmlichen Celluloseethern bzw. Gemischen aus Celluloseethern und Tensiden zu höheren Ergiebigkeiten und verbesserten Werten für das Tragevermögen für erbohrtes Erdmaterial führt.

Mit der Verbesserung der innerstädtischen Infrastruktur (U-Bahn-Tunnel, Wasser- und Gasrohrleitungen, Kabel für Telekommunikations- und Nachrichtensysteme u. a.) wurden zu Beginn der 60er Jahre eine Reihe von Verfahren für das maschinelle Auffahren von Tunneln in Lockergestein entwickelt, sog. Vortriebsverfahren, mit deren Hilfe erbohrtes Gestein schnell, sicher und kostengünstig ausgetragen werden sollte. Die im Laufe der Jahre immer weiter gestiegenen technischen Anforderungen an derartige Schlidsysteme sowie die Anpassung an die jeweils sich ändernden geologischen Bedingungen (Bodenbeschaffenheit u. a.) führten zur Entwicklung vollkommen neuer Methoden auf diesem Gebiet (T. Krause, Diplomarbeit TU Braunschweig, 1987; DE 24 57 187, JP HEI 1-239293, HEI 5-59886, HEI 1-121396). Von den verschiedenen Schildsystemen, die sich z. Z. weltweit im Einsatz befinden, setzen sich immer mehr solche Systeme durch, die mit flüssigkeitsgestützter Ortsbrust (sog. Suspensionsschilde) oder mit erdgeschützter Ortsbrust (sog. Erddruckschilde) arbeiten.

Bei derartigen Systemen werden für die Stutzung der Ortsbrust z.B. Suspensionen aus Wasser und Bentonit oder Tonen verwendet, denen in der Regel Celluloseether, wie z.B. Carboxymethylcellulose sowie Sand oder Glimmer zugesetzt werden. Unter dem vor Ort herrschenden Stutzdruck dringen solche Suspensionen in den Boden ein und versiegeln die Ortsbrust mit einem Filterkuchen. Der Boden wird sodann mit einem Abbaugerät mechanisch oder hydraulisch an der Ortsbrust gelöst, in einer Abbaukammer mit der Tonsuspension vermengt und anschließend über Rohrleitungen an die Geländeoberfläche gefördert. Der ausgehobene Boden wird entweder in einer speziellen Separieranlage von der Tonsuspension getrennt oder direkt in einer Deponie gelagert. Der Zusatz von Bentonit oder Ton zum abgebauten Boden hat neben schmierenden und abdichtenden Funktionen u. a. die Aufgabe, die Schließfähigkeit des Bodens zu erhöhen. Von Nachteil ist hierbei insbesondere, daß durch die Zugabe von Bentonit und Ton die Durchlässigkeit des abgebauten Bodens verringert wird, wodurch die durch den Abtransport erforderliche Entwässerung aufwendiger wird. Darüber hinaus ist die Tragfähigkeit des mit Bentonit und Ton vermischten Bodens z. T. so gering, daß aufgrund der schlechten mechanischen Festigkeit des zu deponierenden Bodens die Zuordnungskriterien zur Endlagerung nicht erfüllt werden, was wiederum zu aufwendigen Nachbehandlungen oder einer kostenintensiven Endlagerung des mit Bentonit oder Ton angereicherten Bodens in speziell hierfür bezeichneten Deponien (Sondermülldeponie) führt.

Von den verschiedenen Schildsystemen, wie z. B Hydroschild, Thixschild, Hydrojetschild und Mixschild, kann nur beim Mixschild von der sog. Flüssigkeitsstützuug auf Erddruckstützung umgestellt werden. Hierbei wird der gelöste Boden selbst als Stützmedium eingesetzt, was insbesondere bei bindig - pastösen Böden vorteilhaft ist. Die nach diesem Prinzip arbeitenden sog. Erddruckschilde (Earth Pressure Balance - EPB-Schilde) wurden ursprünglich in Japan entwickelt, gewinnen aber aufgrund ihrer technischen und wirtschaftlichen Vorteile auch in anderen Ländern immer mehr an Bedeutung. Hierbei wird der Boden mit einem sich drehenden Schneidrad abgebaut und gelangt durch Öffnungen im Schneidrad in die Abbaukammer. Der abgebaute Boden wird z.B. mit Förderbändern oder Förderschnecken oder hydraulisch in Rohrleitungen an die Geländeoberfläche transportiert. Je nach anwendungstechnischen Notwendigkeiten kommen dabei unterschiedliche Varianten, wie z.B. erddruckbetriebene Schilde mit Schaumzugabe oder Erddruckschilde mit Suspensionsgegendruck zum Einsatz. In Japan hat sich die Zugabe von Polymerschäumen als wirksamste Methode erwiesen. Das Prinzip und die Vorteile eines solchen Verfahrens gegenüber herkömmlichen Schildsystemen werden z.B. in JP 900018886 und JP 880061354 erwähnt (siehe auch: Firmenbroschüre der Fa. Komatsu Ltd., (The Development of Chemical Plug Shield Tunnelling", Japan 1990; Firmenbroschüre der Fa. Obayashi Corp. "Development of Chemical Foam Injection Shield Tunnelling Method", Japan 1992; Y. Hanyuda, T. Fujiwara, Research Inst. Obayashi, S. 21 (1988)). Da das Verfahren selbst nicht Gegenstand der vorliegenden Erfindung ist, sollen an dieser Stelle die verfahrenstechnischen Besonderheiten dieses Schildsystems nicht näher erläutert werden.

Die Zusammensetzung derartiger schaumgenerierender Systeme wird z.B. in GB 226 3490 A spezifiziert. Danach bestehen diese Systeme aus obeflächenaktiven Substanzen, wie z.B. bestimmten natürlichen Proteinen, Alkylethersulfaten, wie z.B. Natrium-Laurylethersulfat, wasserlöslichen Celluloseethern, wie z.B. herkömmlichen Celluloseethern wie Methyl-, Carboxymethyl- oder Ethylcelluloseethern sowie wasserabsorbierenden Harzen und Phasentransferkatalysatoren, wie Dodecyltrimethylammoniumchlorid, Alkyl-Benzyl-Dimethylammoniumchloriden und Benzalconiumchlorid.

Mit Hilfe spezieller Schaumgeneratoren werden Schäume mit hohem Tragevermögen für das erbohrte Gestein in der Abbaukammer erzeugt. Das Gemisch aus Boden und Schaum wird mit herkömmlichen Methoden an die Geländeoberfläche transportiert und mit komplexbildenden Salzen bzw. speziellen Enzymen (z.B. Proteasen, Lipasen (siehe JP 90 001 8886)) behandelt. Dadurch soll insbesondere der Abbau der eingesetzten schaumerzeugenden Komponenten beschleunigt und eine umweltverträgliche Endlagerung des Boden-Schaumgemisches sichergestellt werden.

Unabhängig von der Art der Nachbehandlung des Boden-Schaum-Gemisches werden generell mindestens zwei Komponenten, ein Schaumbildner (Tensid) und ein Verdickungsmittel bzw. ein Schaumstabilisator (Celluloseether), verwendet. In vielen Fällen (s. o.) wird jedoch der Einsatz von mehr als zwei Mitteln für erforderlich gehalten, um somit allen technischen Anforderungen gerecht zu werden.

Der Einsatz von mehreren schaumgenerierenden oder schaumstabilisierenden Systemen ist dabei grundsätzlich aus ökonomischen und verfahrenstechnischen Gründen von Nachteil, da der Umgang mit Tensiden oder Proteinen, insbesondere natürlichen, enzymatisch leicht abbaubaren Produkten umfangreiche Sicherheitsvorkehrungen erforderlich macht, um z.B. Kontaminierungen von Lagertanks von noch nicht zum Einsatz gelangten Tensiden oder Proteinen zu vermeiden. Schließlich ist die Technologie zur Herstellung, Bevortatung bzw. Lagerung (pH-Wert- und Temperaturkontrolle) sowie die Herstellung von Mischungen mit erhöhten Kosten verbunden, was wiederum zu einer verfahrenstechnischen Verteuerung des Systems führt. Eine gute biologische Abbaubarkeit ist dabei per se noch nicht mit einer guten Umweltverträglichkeit gleichzusetzen, da die Abbauprodukte selbst eine höhere Ökotozizität aufweisen können, als die Ausgangsverbindung selbst (s. z.B. p-Alkylphenoloxethylate). Ferner führen wasserlösliche Spaltprodukte von biologisch leicht abbaubaren Verbindungen zu einer Erhöhung des Anteils des im Grundwasser gelösten organisch gebundenen Kohlenstoffs (TOC- bzw. DOC-Wert) und damit zu einer unvertretbaren Belastung der Umwelt. Ziel der Entwicklung muß es daher sein, Schaumsysteme bereitzustellen, die die positiven Eigenschaften der herkömmlichen Systeme besitzen, jedoch kostengünstig herstellbar sind und in der Anwendung keinen hohen technischen Aufwand erforderlich machen. Darüber hinaus sollte das erbohrte Boden-Schaum-Gemisch problemlos deponierbar sein und über eine ausreichende mechanische Festigkeit (siehe z.B. Bentonit/Ton) verfügen, um so den Zuordnungskriterien zur Endlagerung in einer Deponie zu genügen.

Überraschenderweise wurde nun gefunden, daß der Einsatz ternärer ionischer Cellulosemischether als Additive für schaumgenerierende Systeme bei der Schildvortriebstechnik für Erddruckschilde gegenüber dem Stand der Technik zu einer gleichwertigen oder höheren Ergiebigkeit bei gleichzeitig verbesserten Werten für das Tragevermögen für das Erdmaterial führt.

Im Rahmen der vorliegenden Erfindung werden ternäre ionische Cellulosemischether vorzugsweise allein oder als Abmischung mit herkömmlichen Polysacchariden, Hydrokolloiden oder oberflächenaktiven, schaumgenerierenden Komponenten (Tensiden) als Additive bei der Schildvortriebstechnik für erddruckbetriebene Schildsysteme eingesetzt.

Dabei werden unter Polysaccharid unveredelte, also chemisch unveränderte, nach physikalischen Methoden (z.B. Extraktion) aufbereitete, in ihrem ursprünglichen Zustand belassene native Biopolymere verstanden. Hydrokolloide bezeichnen veredelte, also chemisch modifizierte Biopolymere. Unter oberflächenaktiven, schaumgenerierenden Komponenten (Tensiden) werden anionische, kationische, nicht-ionische und ampholytartige Tenside verstanden.

Sofern die erfindungsgemäß beanspruchten ternären, ionischen, wasserlöslichen Cellulosemischether nicht allein, sondern in einem Gemisch der o. g. Komponenten eingesetzt werden, beträgt die Menge der erfindungsgemäß beanspruchten Cellulosemischether in der gesamten Abmischung 0,001 - 99,999 Gew.-%, insbesondere 0,1 - 90 Gew.-%, vorzugsweise 1 - 50 Gew.-%.

Bei Einsatz der vorgenannten Abmischungen werden im Rahmen der vorliegenden Erfindung unter Hydrokolloiden chemisch veränderte, veredelte, wasserlösliche Biopolymere verstanden. Bevorzugte Hydrokolloide sind Polysaccharidether, wie z.B. Celluloseether, Carboxyalkylcelluloseether (z.B. Carboxymethylcellulose), Hydroxyalkylcelluloseether (z.B. Hydroxyethylcellulose, Hydroxypropylcellulose), Carboxyalkylhydroxyalkylcelluloseether (z.B. Carboxymethylhydroxyethylcellulose, Carboxymethylhydroxypropylcellulose), Sulfoalkylcelluloseether (z.B. Sulfoethylcellulose, Sulfopropylcellulose, Methylsulfoethylcellulose, Methylsulfopropylcellulose, Carboxymethylsulfoethylcellulose, Carboxymethylsulfopropylcellulose), Alkylcelluloseether (z.B. Methylcellulose, Ethylcellulose), Alkylhydroxyalkylcelluloseether (Methylhydroxyethylcellulose, Methylhydroxypropylcellulose, Ethylhydroxyethylcellulose, Ethylhydroxypropylcellulose), Alkylencelluloseether (z.B. Allylcelluloseether), Alkylenalkylcelluloseether (z.B. Allylmethylcelluloseether, Allylethylcelluloseether), Dialkylaminoalkylcelluloseether (z.B. Diethylaminoethylcelluloseether), Dialkylaminoalkylhydroxyalkylcelluloseether (z.B. Diethylamino-ethylhydroxyethylcelluloseether), modifizierte Stärken, wie z.B. oxidierte, alkylierte, hydroxyalkylierte und carboxyalkylierte Stärken und modifizierte Guarprodukte, z.B. Carboxymethyl-Guar.

Unter dem Begriff Polysaccharid werden bevorzugt Cellulosen, Xanthan, Stärken, Tragant, Tamarinde, Alginate, Gummi arabicum, Proteine, Pektine, Galactomannane (z.B. Guarkerumehl und Johannisbrotkernmehl) und Carragenane verstanden.

Oberflächenaktive, schaumgenerierende Komponenten (Tenside) sind Aniontenside (z.B. Alkylbenzolsulfonate, Alkansulfonate, Fettalkoholsulfate oder Fettalkoholethersulfate), Kationtenside (z.B. Alkylammoniumverbindungen, Imidazolinium-Verbindungen), nicht-ionische Tenside (z.B. Fettalkoholethoxylate, Alkylenolethoxylate, Fettaminoethoxylate, Zuckertenside, Fettsäureethoxylate, Fettsäureesterethoxylate) sowie Amphotenside.

Der Anteil von Hydrokolloid, Polysaccharid und oberflächenaktiver Komponente an der gesamten erfindungsgemäß beanspruchten Abmischung liegt bei 99,999 - 0,001 %, insbesondere 99,9 - 10 %, vorzugsweise jedoch bei 99 - 50 Gew.-%.

Sofern Abmischungen eingesetzt werden, ist Art und Anteil der zum Einsatz gelangten, nicht erfindungsgemäß beanspruchten Hydrokolloide, Polysaccharide und oberfiächenaktiven Komponenten von ökonomischen, ökologischen sowie geologischen und anwendungstechnischen Erfordernissen und Notwendigkeiten abhängig. Die Summe der aus Hydrokolloid, Polysaccharid und oberflächenaktiver Komponente bestehenden Abmischung sowie die Menge der einzelnen Komponenten in der gesamten Abmischung ist nicht Gegenstand der vorliegenden Erfindung und kann daher wahlweise variiert werden, ohne daß dabei das Wesen der Erfindung verändert wird.

Der Einsatz der vorgenannten Abmischungen macht eine homogene und intensive Durchmischung aller Komponenten erforderlich. Das Verfahren der physikalischen Durchmischung bzw. die Art des verwendeten Mischaggregates ist für das Wesen der vorliegenden Erfindung unerheblich und somit auch nicht Gegenstand der Erfindung.

Gemäß einer vorteilhaften Ausführungsform der Erfindung weisen die erfindungsgemäß beanspruchten ternären ionischen Cellulosemischether durchschnittliche Substitutionsgrade durch Alkyl-, insbesondere Methyl- oder Ethylsubstituenten von DS = 0,5 - 2,8, insbesondere DS = 0,8 - 2,5 auf. Der bevorzugte durchschnittliche Substitutionsgrad der ionischen Komponente, insbesondere des Carboxyalkyl-, Dicarboxyalkyl- oder Sulfoalkylsubstituenten, vorzugsweise Carboxymethyl-, Dicarboxymethyl- oder Sulfoethylsubstituenten liegt bei DS = 0,0001 bis 1,5, insbesondere DS = 0,001 bis 1,3. Der durchnittliche molare Substitutionsgrad durch Hydroxyalkylsubstituenten, insbesondere Hydroxyethyl- oder Hydroxypropylsubstituenten liegt bei MS = 0,001 bis 2,5, insbesondere bei MS = 0,01 bis 2,5.

Die Erfindung wird im folgenden anhand von bevorzugten Ausführungsbeispielen im Vergleich zu den den Stand der Technik charakterisierenden Celluloseethern bzw. Abmischungen von Celluloseethern mit schaumgenerierenden Systemen (Tensiden) näher erläutert.

Die zum Einsatz gelangten Celluloseether bzw. physikalischen Mischungen von Celluloseethern werden durch die in Tabelle 1 bezeichneten Kenndaten charakterisiert.

Herstellung der erfindungsgemäß beanspruchten ionischen ternären Cellulosemischether
1. Methyl-hydroxyethyl-sulfoethylcellulose (MHESEC) (siehe Tabelle 1, Produkt Nr. 10)
   7,5 kg einer handelsüblichen Methylhydroxyethylcellulose (Walocel MW 1500 GA; Wolff Walsrode AG, Walsrode) mit einem Trockengehalt von 93,4 % werden in einem geeigneten Druckreaktor mit Schaufelrührer (Lödige-Mischer) 16 h lang in 36 L Isopropanol vorgequollen. Nach dreimaligem Evakuieren und Bedüsen mit Stickstoff werden 1,18 kg Natriumhydroxyd-Plätzchen und 16,05 kg einer 30%igen, wäßrigen Lösung von Natriumvinylsulfonat eingegeben. Nach 30 minütigem Alkalisieren bei 20 °C wird innerhalb von 40 Min. auf 75 °C aufgeheizt und 3 h bei dieser Temperatur verethert. Mit einem Gemisch bestehend aus 1,78 kg Essigsäure (100%ig) und 0,36 kg Salzsäure (30%ig) wird bei 75 °C neutralisiert. Anschließend wird das Reaktionsgemisch abgekühlt und das Produkt vom Suspensionsmedium getrennt, mit wäßrigem Methanol salzfrei gewaschen, getrocknet und gemahlen. Die charakteristischen Kenndaten des Produktes gehen aus Tabelle 1 hervor.
2. Methyl-hydroxyethyl-carboxymethylcellulose (MHECMC) (siehe Tabelle 1, Produkt Nr. 6)
   209,5 Teile (Trockengehalt: 94,2 %) einer handelsüblichen Methylhydroxyethylcellulose (Walocel MKX 30000 PF 01, Wolff Walsrode AG, Walsrode) werden in einem thermostatisierbaren Reaktor mit einem geeigneten Rührer unter Stickstoffatmosphäre in 1.177 Teilen Isopropanol dispergiert und 15 Min. lang gerührt. Nachfolgend werden 4 mL einer 30%igen Natriumhydroxidlösung während 5 Min. zugetropft und 1 h bei 25-30 °C alkalisiert. 1,77 mL einer 79gew.-%igen, wäßrigen Lösung von Monochloressigsäure werden hinzugegeben. In 30 Min. wird auf 70 °C aufgeheizt und 2 h bei dieser Temperatur verethert. Das Produkt wird vom Slurry abgetrennt, mit 100%igem Isopropanol gewaschen, bei Raumtemperatur getrocknet und anschließend gemahlen. Die charakteristischen Kenndaten gehen aus Tabelle 1 hervor.
3. Methyl-hydroxyethyl-dicarboxymethylcellulose (MHEDCMC) (siehe Tabelle 1, Produkt Nr. 7)
   104,7 Teile (Trockengehalt: 94,2 %) einer handelsüblichen Methylhydroxyethylcellulose (Walocel MKX 30000 PF 01, Wolff Walsrode AG, Walsrode) werden in einem thermostatisierbaren Reaktor mit einem geeigneten Rührer unter Stickstoffatmosphäre in 948 Teilen Isopropanol und 49,9 Teilen Wasser dispergiert und 15 Min. lang gerührt. Anschließend werden 4 Teile Natriumhydroxid-Plätzchen hinzugegeben und 60 Min. bei 25 - 30 °C alkalisiert. In 30 Min. wird auf 80 °C erhitzt und bei dieser Temperatur 8,77 Teile Dimethylchlormalonat (95 %) hinzugegeben. Nachfolgend wird 4 h bei 80 °C verethert. Das Produkt wird anschließend vom Slurry abgetrennt, mit Methanol gewaschen, bei Raumtemperatur getrocknet und nachfolgend gemahlen. Die charakterisitischen Kenndaten sind Tabelle 1 zu entnehmen.
4. Methyl-hydroxypropyl-carboxymethylcellulose (MHPCMC) (siehe Tabelle 1, Produkt Nr. 9)
   106,75 Teile (Trockengehalt: 97,05 %) einer handelsüblichen Methylhydroxypropylcellulose (Walocel MKS 20000 PP 11, Wolff Walsrode AG, Walsrode) werden in einem thermostatisierbaren Reaktor mit einem geeignetem Rührer unter Stickstoffatmosphäre in 1.608 Teilen Isopropanol und 166 Teilen Wasser dispergiert und 15 Min. lang gerührt. Anschließend werden 38,4 Teile Natriumhydroxyd- Plätzchen hinzugegeben und 45 Min. bei 25 - 30 °C alkalisiert. 57,5 Teile einer 78,9 gew.-%igen, wäßrigen Lösung von Monochloressigsäure werden hinzugegeben. Innerhalb von 30 Min. wird auf 75 °C erwärmt und das Reaktionsgemisch 2,5 h bei dieser Temperatur gerührt. Das Produkt wird vom Slurry abgetrennt, mit 50%igem, wäßrigem Aceton gewaschen, bei Raumtemperatur getrocknet und anschließend gemahlen. Die charakteristischen Kenndaten gehen aus Tabelle 1 hervor.

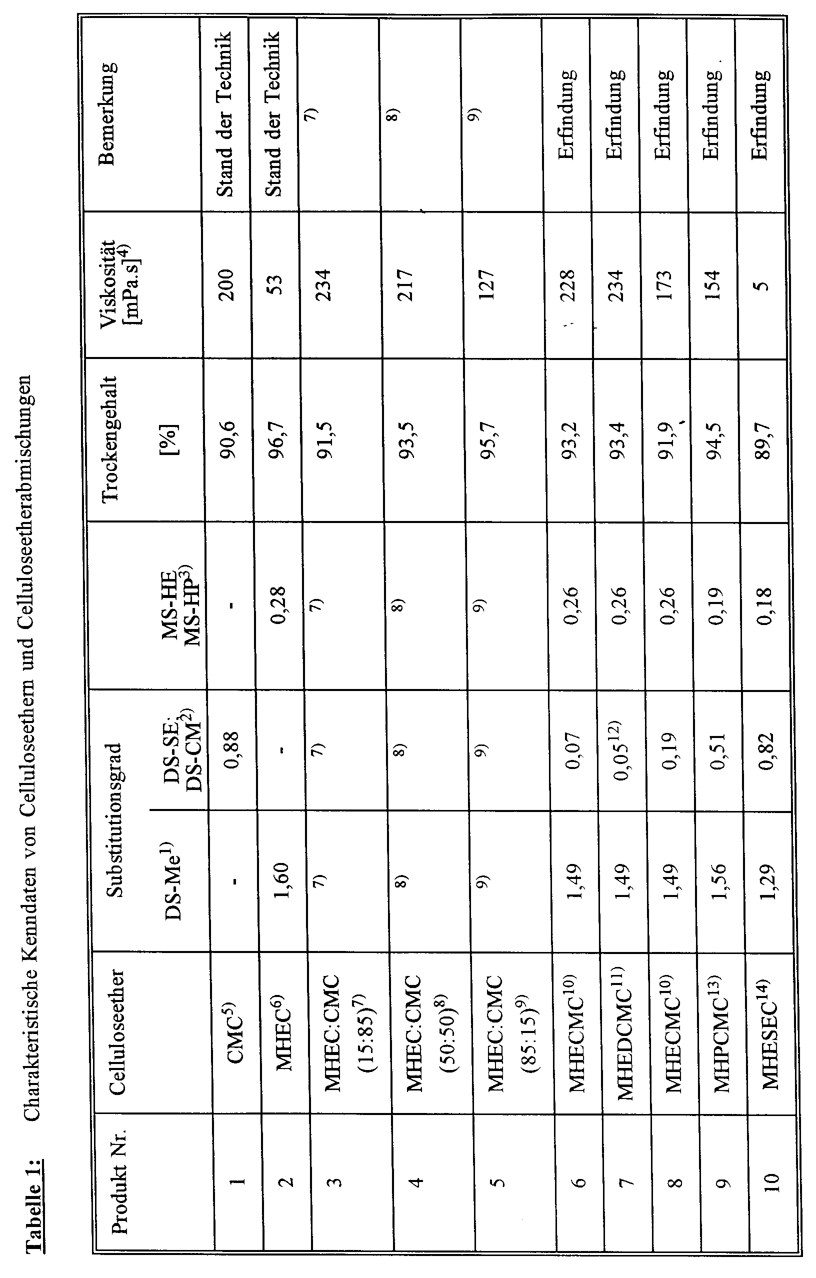

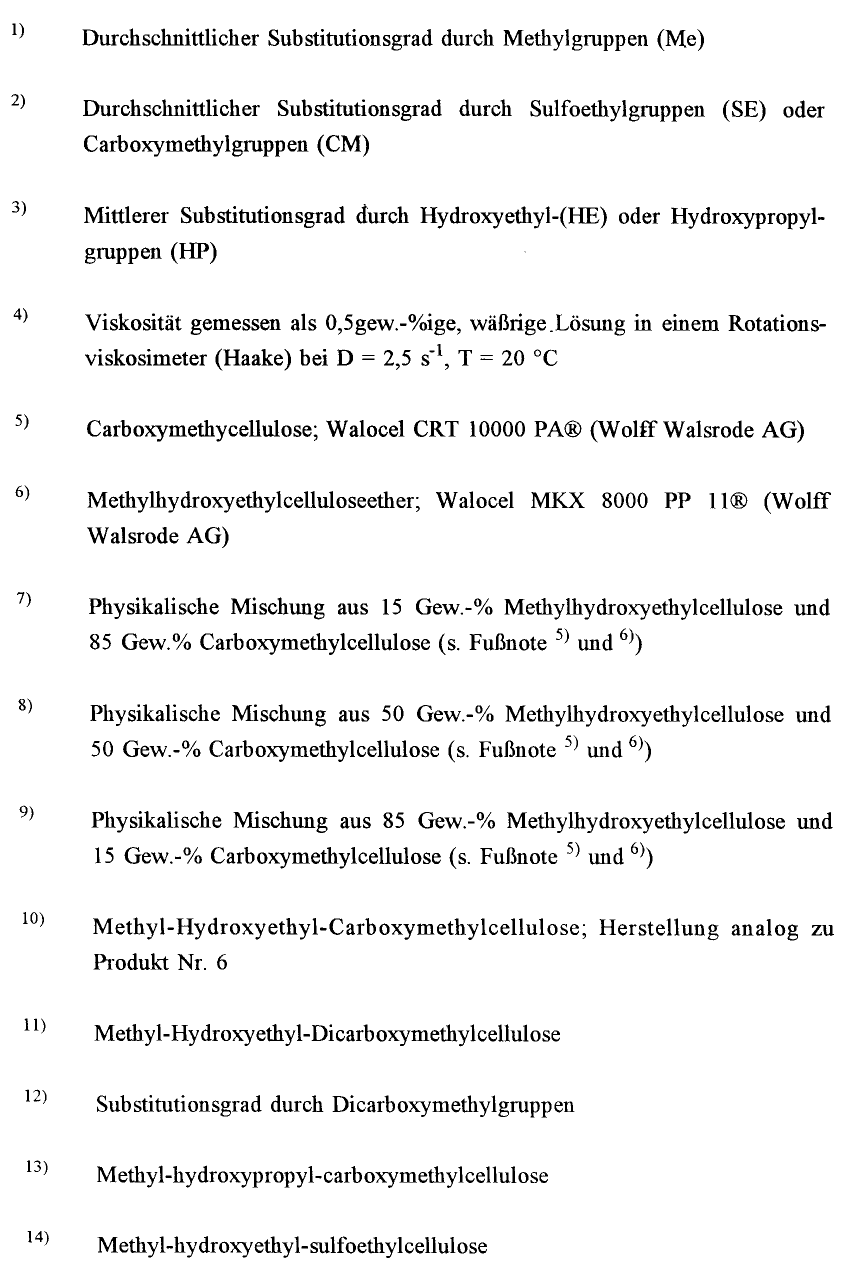

Der Vorteil des Einsatzes der erfindungsgemäß beanspruchten Systeme wird anhand der weiter unten beschriebenen Meßmethoden exemplarisch beschrieben. Die Herstellung der erfindungsgemäß als Additive für Erddruckschilde beanspruchten ternären ionischen Cellulosemischether kann z.B. nach bekannten, in der Literatur bezeichneten Syntheseverfahren vorgenommen werden (siehe z.B. EP 0554749 A2, DE 4203530 A1, EP 0573852 A1). Die so hergestellten Produkte zeigen überraschenderweise allein oder als Gemisch mit herkömmlichen Zusatzstoffen (Hydrokolloiden, Polysacchariden, oberflächenaktiven Komponenten (Tenside)) als Additive beim Schildvortrieb für mit erddruckbetriebene Schildsysteme gegenüber den den Stand der Technik charakterisierenden Produkten (Methylcelluloseether, Carboxymethylcelluloseether, Ethylcelluloseether) höhere Ergiebigkeiten und verbesserte Werte für das Tragevermögen des erbohrten Materials.

Die Produkte werden vorzugsweise kostengünstig in sog. Eintopfverfahren ohne Zwischenisolierung oder Reinigung hergestellt, wobei die Reihenfolge der Zugabe der zum Einsatz kommenden Veretherungsreagenzien für das Wesen der Erfindung unerheblich ist. Es ist somit möglich, die ionische Komponente zuerst mit der Alkalicellulose umzusetzen und diese dann anschließend mit alkylierenden und hydroxyalkylierenden Verbindungen zu verethern. Ebenfalls ist es möglich, die alkylierende Verbindung allein oder im Gemisch mit hydroxyalkylgruppenübertragenden Verbindungen oder carboxyalkyl- oder sulfoalkylgruppenübertragenden Verbindungen vorzulegen und die Veretherung - abgestuft nach den jeweiligen Reaktivitäten der Reaktanden - unter kontrollierten physikalischen Bedingungen (Druck, Temperatur) nacheinander zur Reaktion zu bringen. Ferner können handelsübliche Celluloseether (Carboxymethylcelluloseether, Methylcelluloseether, Methylhydroxyethylcelluloseether, Methylhydroxypropylcelluloseether, Ethylcelluloseether, Ethylhydroxyethylcelluloseether, Ethylhydroxypropylcelluloseether) vorgelegt, und anschließend mit alkylgruppen-, hydroxyalkylgruppen- und/oder carboxyalkylgruppen- und/oder sulfoalkylgruppenübertragenden Reagenzien modifiziert werden.

Als Suspensionsmittel werden nach dem Stand der Technik übliche, in der Literatur beschriebene organische oder wäßrig-organische Systeme verwendet, die selbst nicht Gegenstand der vorliegenden Erfindung sind (siehe hierzu z.B. EP 0 080 678, EP 0 161 607 B1, EP 0 126 959).

Die Aufarbeitung und Konfektionierung der im Tunnelbau für Erddruckschilde erfindungsgemäß verwendeten ternären ionischen Celluloseether erfolgt in üblicher und bekannter Weise nach dem Stand der Technik. Die Produkte werden nach dem Veretherungsprozeß ggf. neutralisiert und vom vorhandenen Slurry-Medium abgetrennt und durch Waschen mit organischen oder wäßrig-organischen Lösungsmittelgemischen, wie z.B. Alkoholen, Alkohol-Wasser-Gemischen, Ketonen bzw. Keton-Wasser-Gemischen von Nebenprodukten und ggf. noch vorliegenden Mengen Alkali bzw. anhaftenden Salzen befreit. Besitzen die Produkte thermische Flockpunkte, so ist eine Reinigung mit heißem Wasser vorteilhaft. Die Reinigung kann, wenn es sich bei der Veretherung um einen 2- bzw. 3-Stufenprozeß handelt, nach der ersten als auch nach der zweiten Stufe vorgenommen werden. Bei Einsatz stöchiometrischer Mengen von alkaliverbrauchenden Reagenzien, wie z.B. Methylchlorid oder Ethylchlorid, kann auf eine Neutralisation verzichtet werden.

Aufgrund der in der 2. bzw. in der 3. Stufe ggf. vorliegenden katalytischen Mengen an Alkali ist es auch möglich, entweder das überschüssige Alkali durch geeignete inerte (z.B. wäßrig-alkoholische Lösungsmittelgemische) Waschmedien zu entfernen und damit die Neutralisation zu umgehen oder im Falle einer Neutralisation die geringen Mengen an Salzen im Produkt zu belassen und auf eine Reinigung zu verzichten.

Die erfindungsgemäß beanspruchten ternären ionischen Cellulosemischether werden mittels der nachfolgend beschriebenen Laboruntersuchungen auf ihre Eignung als Additiv für den Tunnelbau für erddruckbetriebene Schildsysteme gegenüber herkömmlichen Celluloseethern bzw. Abmischungen von Celluloseethern mit Tensiden getestet. Die Eigenschaften, die ein geeignetes Zusatzmittel erfüllen muß, bestimmen sich dabei aus den sehr unterschiedlichen Anforderungen, die an das Boden-Zusatzmittelgemisch gestellt werden (z.B. Abdichtung gegen drückendes Wasser, Verringerung des Scherwiderstandes für Schneid- und Mischrad, Herstellen eines homogenen Gemisches von guter Konsistenz, Eignung für den Bandtransport, Deponiefähigkeit u. a.). Die in den Beispielen erwähnten Mengenangaben stellen keine Absolutwerte dar, sondern können je nach den vor Ort vorliegenden Baugrundverhältnissen sowie geologischen Bedingungen von den tatsächlichen, in der Praxis zum Einsatz kommenden Mengen abweichen.

Folgende Untersuchungen wurden vorgenommen:
1. Untersuchung des Aufschäumfaktors
2. Ermittlung der Konsistenz der Boden-Schaum-Gemisches mittels Setzungsbestimmung (Slump-Test nach DIN ISO 4109)
3. Schaumstabilität und Bestimmung der Fließgrenze mittels Kugelharfe (DIN ISO 4126)
4. Bestimmung der Dichte beim Slump-Test sowie des Trockengehaltes des Boden-Schaum-Gemisches.

Zur Darstellung der Schaumqualität wurde, wie unten angegeben, neben der visuellen Beurteilung, der Schaum-Faktor ermittelt, der das Verhältnis des Volumens des Schaums zum Volumen der flüssigen Lösung darstellt. Für die Bestimmung des Schaumfaktors wurden 1,5gew.-%ige Celluloseetherlösungen unter Berücksichtung ihres Trockengehaltes bereitgestellt. Die Versuche wurden z. T. unter Zugabe eines handelsüblichen Tensids (2 Gew.-% Tensid vom Typ OMC 181®, Henkel KGaA, Düsseldorf) durchgeführt. Generell wurde dabei so vorgegangen, daß 357 g bzw. 350 g Lösung - mit oder ohne Tensid - in einem Gefäß mit einem Fassungsvermögen von 3,5 L (Durchmesser 20 cm, Tiefe 13 cm) mit einem Mixer (Typ MUM 44, Fa. Bosch) während 3 Min. aufgeschäumt wurden (Rührgeschwindigkeitsstufe 4). Die Bestimmung des Schaumfaktors erfolgte durch Messung des Schaumvolumens und Berechnung des Quotienten aus Schaumvolumen und Volumen der Flüssigkeit. Hohe Werte bezeichnen dabei hohe Ergiebigkeiten.

Zur Ermittlung der Schaumstabilität bzw. des Schaumtragevermögens für das erbohrte Bodenmaterial wurde eine Prüfvorschrift nach DIN ISO 4126 für Ortbeton-Schlitzwände herangezogen.

Zur Bestimmung der Fließgrenze des nach dem o. g. Verfahren hergestellten Schaums wurde ein Kugelharfengerät verwendet. Die Fließgrenze kennzeichnet dabei die Anfangsschubspannung, die überwunden werden muß, um das Boden-Schaum-Gemisch in Bewegung zu versetzen. Das Meßprinzip beruht darauf, daß mehrere Glas- und Stahlkugeln von unterschiedlichem Durchmesser und Gewicht gleichzeitig in die stützende Flüssigkeit bzw. den Schaum eingetaucht werden. Bei gegebener Dichte der Flüssigkeit bzw. des Schaums ist jeder Kugel eine andere kritische Fließgrenze zugeordnet (siehe Tabelle 2), bei der sie in der Flüssigkeit bzw. im Schaum in Schwebe bleibt. Kugeln, deren kritische Fließgrenzen kleiner sind als die Fließgrenze der Flüssigkeit bzw. des Schaums, schwimmen auf der stützenden Flüssigkeit bzw. auf dem stützenden Schaum, jene, deren kritische Fließgrenze größer ist, tauchen unter. Die Kugeln sind in der Reihenfolge ihrer wachsenden kritischen Fließgrenzen mit laufenden Nummern gekennzeichnet. Die Fließgrenze der stützenden Flüssigkeit/Schaum liegt also zwischen der kritischen Fließgrenze der Kugel mit der größten Nummer, die noch schwimmt, und der kritischen Fließgrenze der Kugel mit der kleinsten Nummer, die in die stützende Flüssigkeit eingetaucht ist.

Zur Messung wird die Scheibe, an der die Kugeln mittels Perlonfäden hängen, in eine Vorrichtung gehängt, die gestattet, sie langsam in lotrechter Richtung zu bewegen. Damit wird sichergestellt, daß die Kugeln behutsam auf die Oberfläche des Schaums aufgesetzt bzw. unter diese getaucht werden. Die Dauer zwischen Schaumherstellung und Auflegen der Kugelharfe auf die Schaumoberfläche betrug bei den hier durchgeführten Versuchen konstant 70 sec. Die an der Scheibe hängenden Kugeln tauchen in den Schaum ein bzw. bleiben auf diesem schwimmen. Die Fäden der in den Schaum eingetauchten Kugeln sind straff gespannt, die Fäden jener Kugeln, die nicht untergetaucht sind, sind gebogen. Auf der Scheibe sind die einzelnen Kugeln durch laufende Nummern gekennzeichnet. Die größte Nummer der eingetauchten Kugeln (gespannter Faden) wird notiert. Die Ablesung wurde 20 sec nach Auflegen der Kugelharfe auf die Schaumoberfläche vorgenommen.

Für die Untersuchung des Gemisches aus Schaum und dem auszutragenden Erdmaterial wurde ein Musterboden mit einer bestimmten Körnung und definierten Anteilen von Fein-, Mittel- und Grobfraktionen verwendet. Die Körnungskurve des Bodens ist Bild 1 zu entnehmen.

### Bild 1: Körnungskurve des Musterbodens

**Tabelle 2**

| Bestimmung der Fließgrenzen t_{F} in N/m² mit dem Kugelharfengerät | | | | | | | | | | |
|---|---|---|---|---|---|---|---|---|---|---|
| Nr. | Werkstoff Kugel | Kugel Durchmesser (mm) | Gewicht (g) | für Dichte in g/cm³ | | | | | | |
| | | | | 1,02 | 1,07 | 1,12 | 1,17 | 1,22 | 1,27 | 1,32 |
| 1 | Glas | 2,9 | 0,033 | 6,9 | 6,7 | 6,5 | 6,2 | 6,0 | 5,8 | 5,7 |
| 2 | Glas | 4,2 | 0,105 | 10,0 | 9,7 | 9,4 | 9,0 | 8,7 | 8,4 | 8,1 |
| 3 | Glas | 5,8 | 0,26 | 13,8 | 13,4 | 12,9 | 12,5 | 12,1 | 11,6 | 11,2 |
| 4 | Glas | 7,6 | 0,60 | 18,1 | 17,5 | 16,9 | 16,4 | 15,8 | 15,2 | 14,7 |
| 5 | Glas | 10,6 | 1,59 | 25,2 | 24,4 | 23,6 | 22,8 | 22,0 | 21,3 | 20,5 |
| 6 | Glas | 15,1 | 4,70 | 35,9 | 34,8 | 33,6 | 32,5 | 31,4 | 30,3 | 29,2 |
| 7 | Stahl | 4,0 | 0,26 | 39,8 | 39,5 | 39,2 | 38,9 | 38,6 | 38,3 | 38,0 |
| 8 | Stahl | 5,0 | 0,51 | 49,8 | 49,5 | 49,1 | 48,7 | 48,4 | 48,0 | 47,6 |
| 9 | Stahl | 6,0 | 0,87 | 59,7 | 59,3 | 58,8 | 58,4 | 57,9 | 57,5 | 57,0 |
| 10 | Stahl | 7,0 | 1,39 | 70,0 | 69,3 | 68,9 | 68,4 | 67,9 | 67,4 | 66,9 |

Zur Konsistenzbestimmung des Boden-Zusatzmittel-Gemisches im Arbeitsraum und am Förderschneckenende wurden sog. Slump-Werte nach DIN ISO 4109 für Frischbeton ermittelt. Für die Untersuchungen wurde der Musterboden mit einer konstanten Schaummenge vermischt und das Setzmaß mittels Slump-Test gemessen. Der wassergesättigte Boden (Volumen: 6,676 mL, Dichte: 2,1 kg/L) wurde mit 10 Volumen-% Schaum während 2 Min. vermischt und anschließend gewogen. Das Gemisch aus Boden und Schaum wurde anschließend in einen Hohlkegelstumpf definierter Abmessungen eingefüllt. Die Form wurde auf eine feste, ebene, feuchte und wasserabweisende Oberfläche gestellt. Nach Ziehen des Kegelstumpfes wurde das Setzmaß direkt entsprechend DIN ISO 4109 ermittelt, indem die Differenz zwischen der Höhe der Form und dem höchsten Punkt des Prüfkörpers auf 5 mm genau bestimmt wurde. Beträgt das Setzmaß (Ausbreitmaß) weniger als 50 mm, ist das Boden-Schaum-Gemisch zu steif, um verarbeitet zu werden. Andererseits sind Werte von über 300 mm ebenso unerwünscht, da aufgrund der stark verflüssigenden Wirkung das Produkt keine stabilisierenden und abdichtenden Eigenschaften mehr besitzt (Gefahr des sog. "Tagbruchs") und daher weder vorbehaltlos eingesetzt noch problemlos mittels Förderbändern ausgetragen werden kann. Für das hier bezeichnete Anwendungsgebiet werden Setzmaße von 180 ± 50 mm angestrebt, um ein verarbeitbares Gemisch zu erhalten, das ohne weitere Nachbehandlungen (Trocknung oder Separierung u. ä.) abtransportiert und deponiert werden kann.

Die Dichte des Boden-Schaum-Gemisches wurde ca. 5 Minuten nach Herstellung des Gemisches mittels Volumenbestimmung und Wägung des Materials ermittelt, das nach der Befüllung des Kegelstumpfes übrig geblieben war. Um die Wirksamkeit der Muster beurteilen zu können, wurde die Schaumzugabe mit 10 Volumen-% im ersten Schritt knapp ausgelegt. In einem weiteren Schritt wurden die Zugabemengen bei verschiedenen Mustern soweit gesteigert, bis eine brauchbare, mit den übrigen Konsistenzwerten (Slump-Test) vergleichbare Mischung gefunden wurde. Die tatsächlich erforderliche Menge an zuzusetzendem Schaum ist dabei von der jeweiligen Bodenart, dem Grundwasserdruck, der Bauart des Schildes u. v. a. m. abhängig und kann dabei in der Praxis von den hier verwendeten Einsatzmengen deutlich abweichen.

In der nachfolgend aufgeführten Tabelle (Tabelle Nr. 3) sind die Ergebnisse der anwendungstechnischen Untersuchungen aufgeführt. Unbehandelter Boden wurde dabei mit einem bestimmten Tensid allein, als Gemisch mit handelsüblichen Celluloseethern oder als physikalische Abmischung verschiedener handelsüblicher Celluloseether, mit den erfindungsgemäß beanspruchten ternären ionischen Cellulosemischethern verglichen.

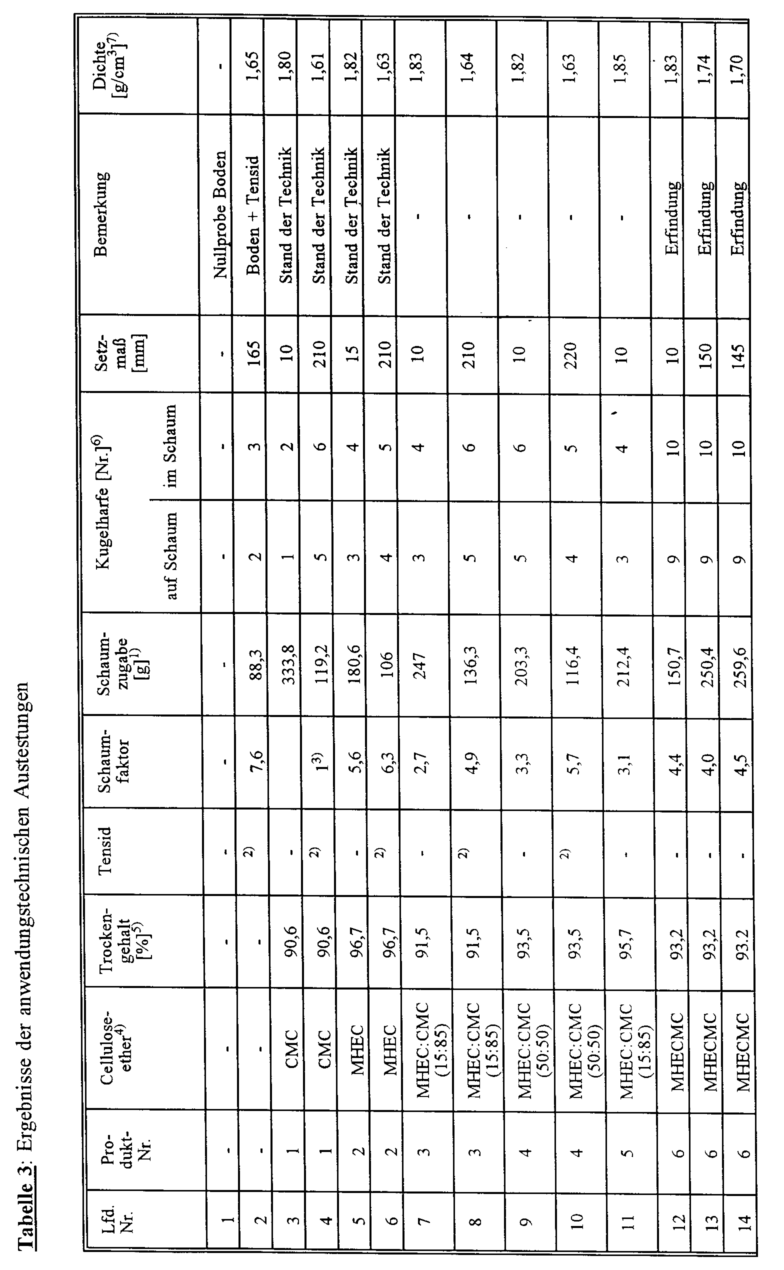

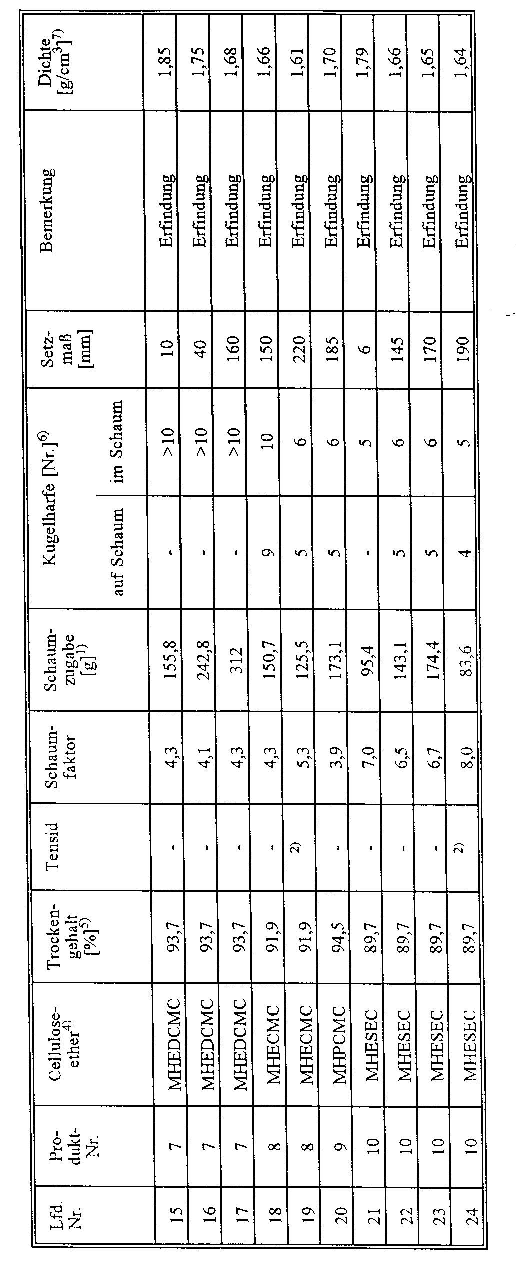

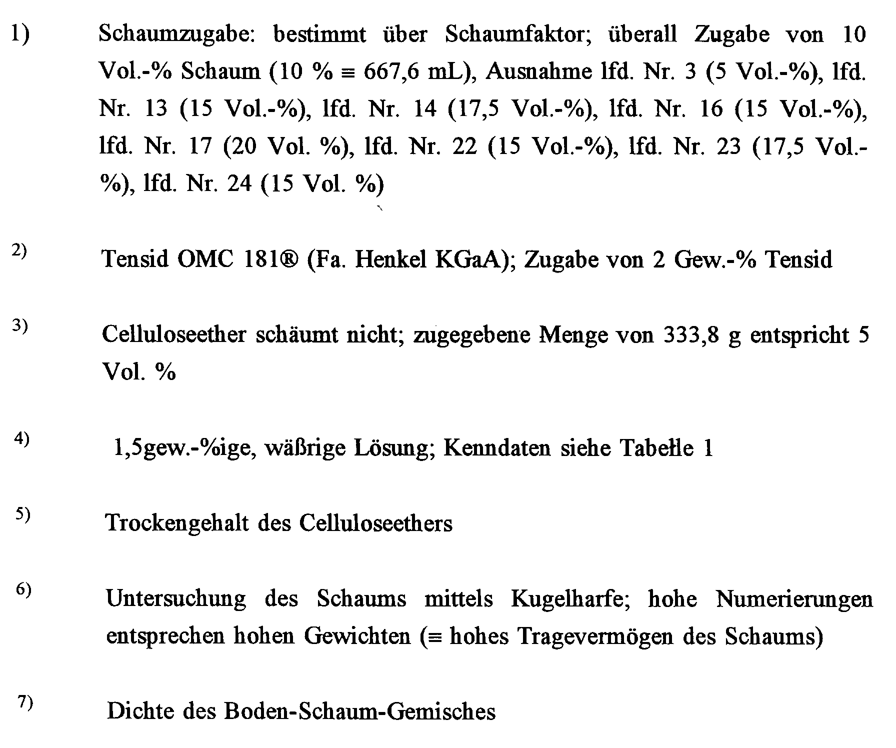

Ziel bei den anwendungstechnischen Untersuchungen war es, einfache Systeme bereitzustellen, die über hohe Schaumfaktoren (Ergiebigkeiten) und hohe Werte für das Tragevermögen des erbohrten Gesteins (Setzmaß) verfügen.

Aus ökonomischen und ökologischen Gründen sollte vorzugsweise auf den Zusatz von schaumgenerierenden Systemen (Tensiden) verzichtet werden. Dabei sollten Systeme mit hohen Ergiebigkeiten (Schaumfaktoren), ausreichend hohen Setzmaßen von 180 ± 50 mm bei gleichzeitig optimalem Tragevermögen für das erbohrte Erdmaterial, gekennzeichnet durch Slump-Werte von > 6 (Kugelharfe, Stand der Technik (s. Tabelle 3)), bereitgestellt werden.

Das Ergebnis der Untersuchungen zeigt, daß nach dem Stand der Technik mit Methylhydroxyethylcelluloseethern ohne Tensidzusätze Schäume mit guter Verdickungsleistung und somit einem befriedigenden Tragevermögen für erbohrtes Erdmaterial erhalten werden können (Tabelle 3, laufende Nr. 5, Produktnr. 2). Nachteilig hierbei ist jedoch der niedrige Wert für das Setzmaß von ca. 15 mm. Eine wesentliche Änderung der Bodenkonsistenz konnte daher durch Zusatz der MHEC allein nicht erreicht werden. Das Material ist in dieser Form nicht für den Einsatz in einem Erddruckschild geeignet, da das Boden-Schaum-Gemisch für eine Verarbeitung bei der Schildvortriebstechnik zu steif ist. Bei Einsatz eines derartigen Materials kann es in der Praxis zum Einbruch von Grundwasser kommen, da dann das Schild dem Wasserdruck nicht mehr Stand halten kann. Erst durch Zugabe von Tensid zeigt das Boden-Schaumgemisch eine verbesserte Stabilität und ist erst dann für den Einsatz in Erddruckschilden mit schaumgenerierenden Systemen verwendbar (Tabelle 3, lfd. Nr. 6). Dabei ist jedoch die stark konsistenzändernde, schon bei kleineren Schaumzugabemengen verflüssigende Wirkung, insbesondere bei stärkeren Erd- und Grundwasserdrücken von Nachteil, da eine abdichtende Wirkung gegen drückendes Wasser nur mit einer höheren Schaumzugabe erzielt werden kann, dann aber die Druckhaltung in der Förderschnecke nicht mehr zu realisieren ist.

Eine handelsübliche Carboxymethylcellulose verhält sich ähnlich. Die schäumende Wirkung dieses ionischen Celluloseethers ist praktisch vernachlässigbar, so daß auch hier nur der kombinierte Einsatz von Verdickungsmittel und Tensid ausreichend stabile Schäume mit entsprechend gutem Tragevermögen für erbohrtes Gestein garantiert (siehe Tabelle 3, lfd. Nr. 3 und 4, Produkt Nr. 1).

Wird hingegen auf den Zusatz des Verdickungsmittels (Celluloseether) vollkommen verzichtet und nur das Tensid allein eingesetzt, können zwar hohe Schaumergiebigkeiten und gute Werte für das Setzmaß eingestellt werden. Derartige Schäume verfügen jedoch über kein Tragevermögen für erbohrtes Material und sind daher ebenfalls allein nicht einsetzbar (Tabelle 3, lfd. Nr. 2).

Auch physikalische Abmischungen von handelsüblicher Methylhydroxyethylcellulose und Carboxymethylcellulose führen zu keiner wesentlichen Verbesserung des Standes der Technik. Mit Gemischen aus Methylhydroxyethylcellulose und Carboxymethylcellulose von 85 zu 15 Teilen wird bezüglich der anwendungstechnischen Austestungen der Stand der Technik weitgehend eingestellt, ohne daß sich damit jedoch wesentliche Vorteile für den Anwender ergeben (Tabelle 3, lfd. Nr. 11, Produkt Nr. 5).

Überraschenderweise wurde nun gefunden, daß der Einsatz von ternären, ionischen, wasserlöslichen Cellulosemischethern, insbesondere Methyl-hydroxyethyl-carboxymethylcellulose (MHECMC), Methyl-hydroxyethyl-dicarboxymethylcellulose (MHEDCMC), Methyl-hydroxyethyl-sulfoethylcellulose (MHESEC) und Methyl-hydroxypropyl-carboxymethylcellulose (MHPCMC) gegenüber dem Stand der Technik zu gleichwertigen bzw. verbesserten Ergiebigkeiten, bei z. T. deutlich verbesserten Werten für das Tragevermögen (Setzmaß) führt.

Mit einer Methyl-hyroxyethyl-carboxymethylcellulose (MHECMC) (Produkt Nr. 6 in Tabelle 3) lassen sich entweder durch Erhöhung der Menge an Celluloseether (Tabelle 3, lfd. Nr. 14) oder durch Zusatz von Tensid (Tabelle 3, lfd. Nr. 19) gegenüber dem Stand der Technik deutlich tragfähigere Schäume erhalten. Bei Änderung des Substitutionsgrades sind Produkte der gleichen Substanzklasse auch bei geringen Zugabemengen an Celluloseether (10 Vol.-%) ohne Tensidzusätze als Additive bei der Schildvortriebstechnik mit schaumgenerierenden bzw. schaumstabilisierenden Systemen geeignet und führen dadurch zu einer wesentlichen Vereinfachung des Verfahrens (Tabelle 3, lfd. Nr. 18).

Mit Methyl-hydroxyethyl-dicarboxymethylcellulosen lassen sich darüber hinaus Schäume erzeugen, die oberhalb der Meßgrenze mittels der hier verwendeten Untersuchungsmethode zur Ermittlung der Fließgrenze (Schaumkonsistenz) liegen. Es werden extrem kompakte, dichte Schäume erhalten, die ein hervorragendes Tragevermögen für das erbohrte Material aufweisen (Tabelle 3, lfd. Nr. 17) und damit zu einer deutlichen Verbesserung des Standes der Technik führen.

Die in Tabelle 3 bezeichneten Produkte Methyl-hydroxypropyl-carboxymethylcellulose (MHPCMC) und Methyl-hydroxyethyl-sulfoethylcellulose (MHESEC) verhalten sich prinzipiell ähnlich. Hervorzuheben sind hierbei die sehr guten Ergiebigkeiten (Schaumfaktoren) (Produkt-Nr. 10 in Tabelle 3) und die den Stand der Technik entsprechenden Werte für das Setzmaß. Der Einsatz dieser Produkte führt wiederum zu einer Vereinfachung des Verfahrens, da auf den Zusatz von schaumgenerierenden Systemen (Tensiden) verzichtet werden kann.

Dadurch, daß der Einsatz weiterer Additive, so wie sie die Patentliteratur (siehe oben) beschreibt, bei Verwendung der erfindungsgemäß beanspruchten Celluloseether nicht zwingend erforderlich ist, kommt es bei Verwendung der neuartigen Celluloseether zu einer kostengünstigeren und verfahrenstechnisch einfacheren Umsetzung. Durch die verbesserten anwendungstechnischen Parameter, die bei Verwendung von Einkomponentensystemen eingestellt werden können (Schaumergiebigkeit, Setzmaß, Schaumtragevermögen), ist es darüber hinaus möglich, zu einer verfahrenstechnisch einfacheren Umsetzung zu gelangen und damit den Stand der Technik zu verbessern. Da die zur Untersuchung gelangten Muster allein, bevorzugt jedoch in Kombination mit Tensiden verbesserte ökotoxikologische Werte aufweisen, (DOC-Werte) geht mit dem Einsatz der erfindungsgemäß beanspruchten Produkte eine kostengünstigere Deponierung des Abraumes einher (s. Tabelle 4).

Je nach anwendungstechnischen Erfordernissen kann es zu einem Mehreinsatz an Produkt (Schaumzugabe) kommen, da eine Änderung der geologischen Eigenschaften des Bodens, auch eine Anpassung des Schaumsystems an die örtlichen Verhältnisse erforderlich macht. Überraschenderweise geht hiermit jedoch keine unverhältnismäßige Erhöhung des im Eluat des Boden-Schaum-Gemisches enthaltenen gelösten organisch gebundenenen Kohlenstoffs einher (siehe Tabelle 4, lfd. Nr. 2 und 5). Bei Verwendung der neuartigen Celluloseether in Kombination mit herkömmlichen schaumgenerierenden Systemen (Tensiden) kommt es hingegen zu einer Verbesserung der Schaumergiebigkeit (Schaumfaktor) bei gegenüber dem unbehandelten Boden nahezu unveränderten ökotoxikologischen Parametern (Tabelle 4, Vergleich lfd. Nr. 1 und 2 mit lfd. Nr. 4 und 6).

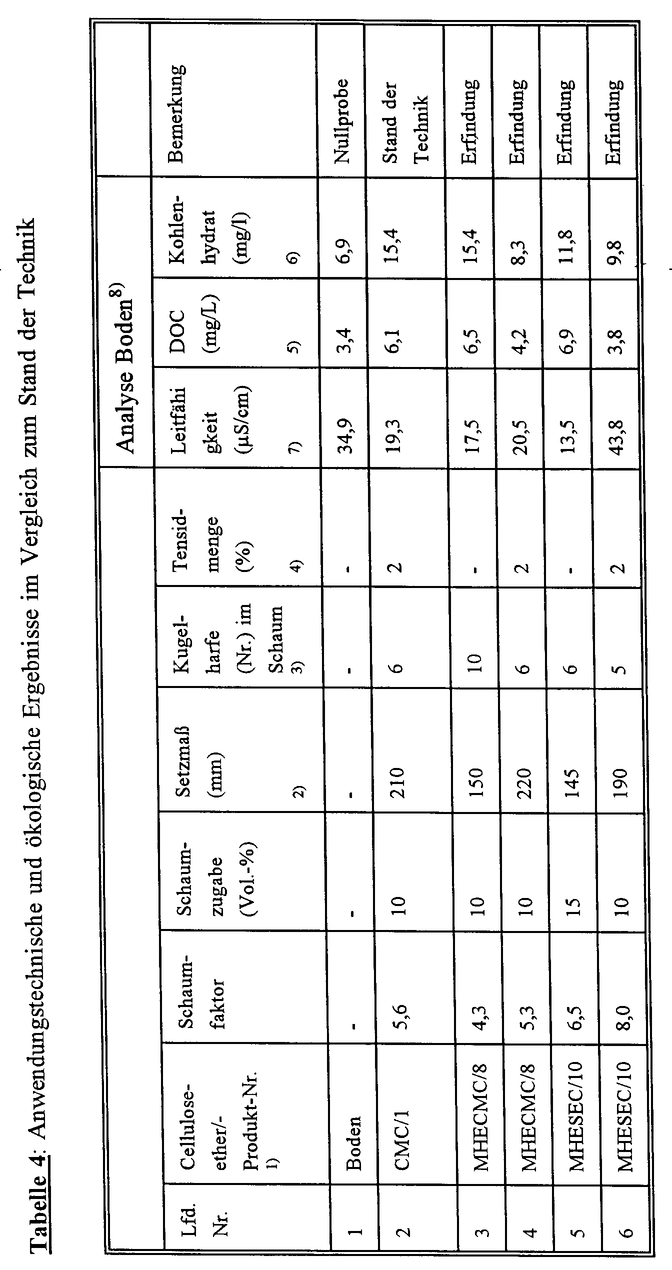

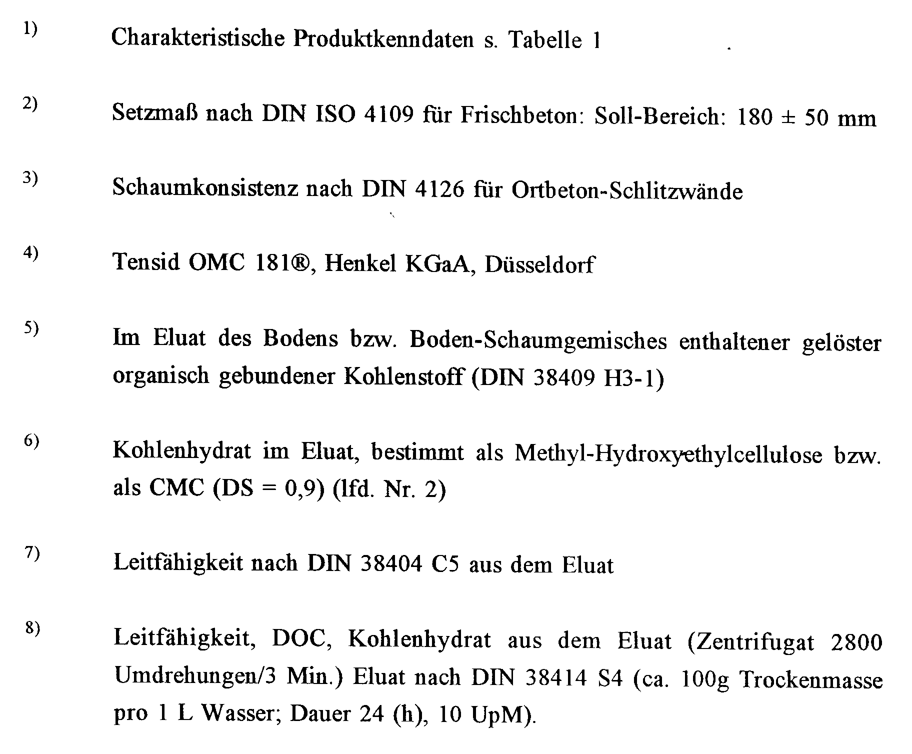

## Patentansprüche

1. Wasserlösliche, insbesondere ternäre, vorzugsweise ternäre ionische Cellulosemischether, besonders anionische wasserlösliche Cellulosemischether als Additive für Bohrspülanwendungen.

2. Verwendung von ternären, insbesondere ternären, anionischen wasserlöslichen Cellulosemischethern entsprechend Anspruch 1, dadurch gekennzeichnet, daß diese allein oder im Gemisch mit weiteren Komponenten, insbesondere Tensiden, als Additive in Bohrspülanwendungen eingesetzt werden.

3. Verwendung von ternären, insbesondere ternären anionischen wasserlöslichen Cellulosemischethern entsprechend mindestens einem der o. g. Ansprüche, dadurch gekennzeichnet, daß das Additiv als Bohrspül-Hilfsmittel, insbesondere als schaumgenerierende oder schaumstabilisierende Komponente in Bohrspülanwendungen eingesetzt wird.

4. Verwendung entsprechend mindestens einem der o. g. Ansprüche, dadurch gekennzeichnet, daß es sich bei den Anwendungen um Bohrspülanwendungen, insbesondere um Bohrspülanwendungen mit Schildvortriebstechnik, insbesondere um Erddruckschilde handelt.

5. Verwendung entsprechend mindestens einem der o. g. Ansprüche, dadurch gekennzeichnet, daß es sich um Carboxyalkyl-substituierte Cellulosemischether, insbesondere um binäre und ternäre Carboxyalkyl-substituierte Cellulosemischether handelt.

6. Verwendung entsprechend mindestens einem der o. g. Ansprüche, dadurch gekennzeichnet, daß es sich um Carboxyalkyl-hydroxyalkyl-alkylcellulose, besonders um Carboxymethyl-hydroxyalkyl-alkylcellulose, insbesondere um Carboxymethyl-hydroxyethyl-methylcellulose und Carboxymethyl-hydroxypropyl-methylcellulose handelt.

7. Verwendung entsprechend mindestens einem der o. g. Ansprüche, dadurch gekennzeichnet, daß es sich um Dicarboxyalkyl-substituierte Cellulosemischether, insbesondere um binäre und ternäre Dicarboxyalkyl-substituierte Cellulosemischether handelt.

8. Verwendung entsprechend mindestens einem der o. g. Ansprüche, dadurch gekennzeichnet, daß es sich um Dicarboxyalkyl-hydroxyalkyl-alkylcellulose, besonders um Dicarboxymethyl-hydroxyalkyl-alkylcellulose, insbesondere um Dicarboxymethyl-hydroxyethyl-methylcellulose und Carboxymethyl-hydroxypropyl-methylcellulose handelt.

9. Verwendung entsprechend mindestens einem der o. g. Ansprüche, dadurch gekennzeichnet, daß es sich um Sulfoalkyl-substituierte Cellulosemischether, insbesondere um binäre und ternäre Sulfoalkyl-substituierte Cellulosemischether handelt.

10. Verwendung entsprechend mindestens einem der o. g. Ansprüche, dadurch gekennzeichnet, daß es sich um Sulfoalkyl-hydroxyalkyl-alkylcellulose, besonders um Sulfoethyl-hydroxyalkyl-alkylcellulose, insbesondere um Sulfoethyl-hydroxyethyl-methylcellulose und Sulfoethyl-hydroxypropyl-methylcellulose handelt.
